Europäisches Patentamt

(19) European Patent Office

Office européen des brevets

(11) Publication number: **0 037 173**

**A1**

(12) **EUROPEAN PATENT APPLICATION**

(21) Application number: 81300846.3

(22) Date of filing: 27.02.81

(51) Int. Cl.³: **B 29 D 27/04**
**B 29 D 27/00**

(30) Priority: 25.03.80 US 133700

(43) Date of publication of application:
07.10.81 Bulletin 81/40

(84) Designated Contracting States:
BE DE FR GB IT LU NL

(71) Applicant: Celotex Corporation
1500 Dale Mabry Drive
Tampa Florida 33607(US)

(72) Inventor: Daly, James F.
6340 Bahama Shore Drive, South
St. Petersburg Florida(US)

(72) Inventor: Barry, Leon F.
7251 11th Avenue, North
St. Petersburg Florida(US)

(72) Inventor: Harrison, Richard L.
3016 Sarah Drive
Clearwater Florida(US)

(74) Representative: Baillie, Iain Cameron et al,
c/o Ladas & Parry Blumenstrasse 48
D-8000 München 2(DE)

(54) Apparatus and method for producing foam sheet and board products using upstream edge dams.

(57) Apparatus and method are described for continuously producing a foam sheet or board product preferably as a fiber-reinforced and web-faced laminate. A foam-forming mixture (45) is applied to conveying means and conveyed through an adjustably restricted gap (34) formed by a nip roll (32, 33). Damming means (49), which are selectively adjustable for movement in all directions, are provided upstream of the nip roll (32, 33) to contain and guide the deposition of the foam-forming mixture (45). Preferably the foam-forming mixture (45) is applied to a layer of glass fibers (42) conveyed toward the nip roll (32, 33) by a lower facing web (43) and an upper facing web (43') supplied above the foam-fiber combination. The resulting composite is passed through the gap (34) formed by the nip roll (32, 33).

./...

FIG.1

- 1 -
APPARATUS AND METHOD FOR PRODUCING FOAM SHEET
AND BOARD PRODUCTS USING UPSTREAM EDGE DAMS

This invention relates to a method and apparatus for continuously producing a plastic foam insulation board.

Foamed resins are used extensively today, as, e.g., in structural and/or insulating panels in building construction. Many procedures have been developed for the continuous production of these foamed structures which are often surfaced on at least one but usually on both sides with relatively thin sheets of facing material. The prior art methods for producing foamed structures continuously have suffered from various deficiencies. A review of some of these prior attempts is presented in U.S. Patent No. 4,005,958. As explained in this patent, these prior systems have often been quite complicated mechanically and troublesome and expensive to maintain. A further disadvantage is that the specially designed equipment involved in these systems puts restraints on the systems' flexibility and can severely reduce production rates.

The solution proposed in U.S. Patent No. 4,005,958 provides a combination of features of a simpler design but, however, still requires the utilization of an elaborate side containment setup extending along the entire length of the conveyor line. This approach of employing sidewalls of one sort or another for the lateral confinement of an expanding foam while it is on a conveyor is resorted to time and again in prior methods of continuously producing foam composites. The method is disclosed, for example, in U.S. Patent Nos.

3,751,197, 3,761,209, 3,942,925, 4,043,719, 4,102,619, 4,108,585, 4, 154, 562, and 4,177,028. Installation and maintenance of such side fencing arrangements add to the complexity and expense of the foam production method.

The method of producing foamed resin-core, web-faced laminates generally involves feeding two continuous webs of sheet material from supply rolls, applying a foamable plastic mixture to one or both of the advancing webs, and then causing the webs to converge into a spaced relation with the foamable mix sandwiched between them. Provision is made for controlling the distribution of the foamable mix and causing it to adhere to the webs to produce a laminated composite which is finally cured or set.

A relatively simple method of producing reinforced foam laminates of this kind without the employment of complicated side containment means is disclosed in U.S. Patent No. 4,118,533. In this method a mat of glass fibers is contacted with the foam-forming mixture and the resulting fibrous mat/foamable mixture composite is contacted with a facing sheet(s) and then passed between the nip of two rotating rolls thereby forcing the foam-forming mixture into the interstices between the glass fibers of the mat. After passing between the nip of the two rolls, the composite is next conveyed into an oven where the foam-forming mixture is permitted to freely expand and the fibers of the glass fiber mat separate under the influence of the expanding foam to become evenly distributed throughout the cured foam laminate. Through this simple method it has been possible to continuously manufacture at a high production rate a plastic foam insulation board having superior performance characteristics and a highly pleasing appearance. Notwithstanding the general

- 3 -

high quality of this process, it has the disadvantageous feature that excess foam material forms along the longitudinal edges of the board product. This excess material is cut off in the finished product, constituting an added cost in terms of both the raw materials which must be discarded and the cost of disposing of them. It would be highly desirable if a simple and efficient method of continuously producing foamed laminates could be found which incorporates the advantageous features of the method disclosed in U.S. Patent No. 4,118,533, but eliminates or significantly reduces the amount of chemical edge trim normally associated with this method.

It is therefore an object of the present invention to provide an improved method and apparatus for the continuous production of a foam material in a simple and economical manner, wherein an efficient use of the foam-forming ingredients is achieved.

The present invention provides apparatus for continuously producing a foam plastic product from a foamable reaction mixture on a moving carrier comprising conveyor means for conveying said carrier along a production line, means for depositing said foamable reaction mixture on said carrier, means defining a nip, said nip being located downstream of the point of deposition of foamable mixture, said carrier and deposited foamable mixture being passed in operation through said nip and on downstream along said production line, the nip gap being set to disperse said deposited foamable mixture substantially evenly over said carrier, characterized in that containment means are located upstream of said nip-defining means whereby said foamable mixture is contained on said carrier.

The present invention also provides a method for continuously producing a foam plastic product from a foamable reaction mixture on a moving carrier comprising conveying said carrier along a production line, depositing said foamable reaction mixture on said carrier, passing said carrier and deposited foamable mixture through the nip of a nip-defining means and on downstream along said production line, said nip being located downstream of the foamable mixture deposition point and being set for dispersing substantially evenly said deposited foamable mixture over said carrier, characterized in that said foamable mixture is contained on said carrier in the region immediately upstream of said nip-defining means.

The method of this invention is simple to carry out and the apparatus is free from unnecessary complexity.

The process of the invention is particularly suitable for the production of reinforced foams faced on both surfaces, such as the structural laminate disclosed in U.S. Patent No. 4,118,533. The preferred process for producing such reinforced foams comprises the steps of applying to a reinforcement material (e.g., a layer of glass fibers), whose lower surface is contacted with a facing sheet, a foam-forming mixture, passing the faced reinforcement material and foam-forming mixture along a conveyor and through a gap provided by the nip of two rotating rolls, and confining the foam-forming mixture to the conveyor by means of side surfaces which laterally flank the upstream portion of the conveyor before the gap. A facing sheet can be provided to cover the upper surface of the reinforcement material/foam-forming mixture composite and is suitably supplied at the point where this composite passes through the gap on the conveyor line. After passing through the gap, the faced, reinforced foam-forming mixture advances into an expansion zone wherein the foam-

- 5 -

forming mixture expands to the cured state and the reinforcement material becomes distributed throughout the
foam. In the expansion zone the reinforced foam-forming mixture can be subjected to the influence of heat
controllably added by the circulation of hot air and
cured to a rigid foam structure. This rigid structural
foam is then periodically severed into finite lengths,
thereby forming discrete panels.

The preferred apparatus has a bottom conveyor
positioned below a means for dispensing a foam-forming
mixture thereto. The conveying surface of the conveyor
is the facing sheet which conveys the foaming material
as the material is processed thereon. The reinforcement material, as, e.g., a mat of glass fibers, is positioned above this facing sheet and is transported
therewith by the conveyor. The foam-forming mixture is
then suitably applied to the upper surface of the advancing reinforcement material, the reinforcement ma-
terial and facing sheet thereby serving as a carrier for
said mixture. The apparatus is further provided downstream of the dispensing means with a means defining a
nip through which the foam-forming mixture, reinforcement means and facing sheet are passed for dispersing
substantially evenly the dispensed foam-forming mixture throughout the reinforcement material. The nip
defining means comprise two horizontally disposed rotating rolls located transversely to the bottom conveyor. The rolls are located one above the other and
are spaced apart to provide a horizontally extending
gap therebetween.

Containment means for retaining the dispensed
foam-forming mixture on its carrier (e.g., reinforcement
material and facing sheet) are upstream of and adjacent
the nip-defining means and adjacent the side edges of
the carrier. The containment means preferably comprise two side walls, one at each side of the conveyor upper surface with each side wall's downstream edge adjacent the nip-defining means. The side walls function to retain the foam-forming materials on the conveyor upper surface after said materials' deposition thereon in the region immediately upstream of the nip-defining means. The side walls can be variously located at the respective conveyor sides provided the side walls are not positioned laterally outside the opposed side margins of the nip-defining means. Means are connected to the side walls for adjustably moving the side walls in all directions. The side walls can thus be moved laterally to control the width of the space between them such that the width of the spreading foamable material on the conveyor upper surface is adjustable. Also the side walls can be moved away from the conveyor for cleaning purposes.

The invention will now be described with reference to the accompanying drawings in which:

Figure 1 is a side schematic representation of a conveyor system incorporating the inventive concept;

Figure 2 is an enlarged top view of a portion of the conveyor system of Figure 1;

Figures 3a--3d are side elevational views of variously-shaped edge dams, positioned adjacent and upstream of the upper metering roll of Figure 1; and

Figure 4 is an enlarged perspective view of the edge dam shown to the left in Figure 2, with its adjustable mounting means.

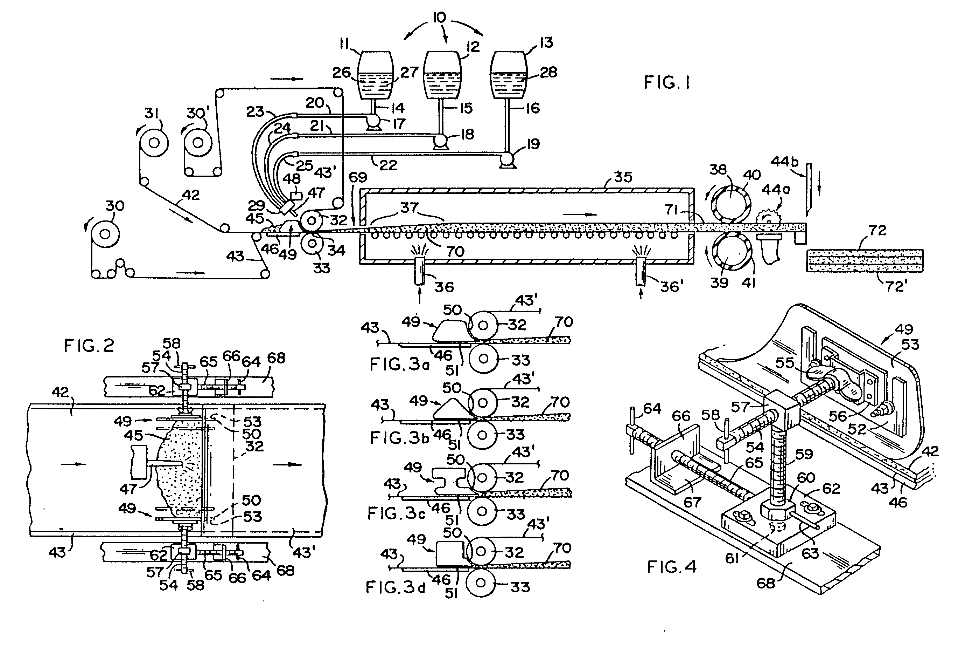

Referring to the drawings, and in particular to Figure 1, there is shown an apparatus in accordance with the present invention. The plastic foam used is a polyisocyanurate foam. The components of the foamable mixture are separately stored and pumped and metered to the conveyor by conventional equipment. The storage tanks 10 comprise an isocyanate tank 11, a polyol tank 12, and a catalyst tank 13, each respectively connected to outlet lines 14, 15 and 16. The lines 14, 15 and 16 form the inlet to metering pumps 17, 18 and 19. The pumps 17, 18, and 19 discharge respectively through lines 20, 21 and 22 which are in turn respectively connected to flexible lines 23, 24 and 25. The flexible lines 23, 24 and 25 discharge to mixing head 29 equipped with a pour spout or nozzle 47. The apparatus is also provided with a roll 30 of lower facing sheet material 43', a roll 30' of upper facing sheet material 43', and a roll 31 of glass fiber material. The apparatus is also provided with metering rolls 32 and 33 and an oven 35 provided with vents 36 and 36' for introducing and circulating hot air. The apparatus is also provided with pull rolls 38 and 39 each of which has a flexible outer sheath 40 and 41. The apparatus is also provided with cutting means 44a for cutting off side edge excess material and 44b for severing the structural laminate produced into finite lengths thereby producing discrete panels.

In operation, the isocyanate tank 11 is charged with the organic polyisocyanate admixed with the blowing agent 26 and the surfactant 27, the polyol tank 12 is charged with the polyol, and the catalyst tank 13 is charged with the catalyst composition 28. The outputs of the pumps 17, 18 and 19 are adjusted to give the desired ratios of the ingredients in the tanks 11, 12 and 13. These ingredients pass respectively through lines 20, 21 and 22 as well as lines 23, 24 and 25 whereupon they are mixed in the mixing head 29 to form the foam-forming mixture 45 which is then deposited on the glass fiber material 42. Glass fiber material 42 comprises a thin, substantially incompressible yet expanisble mat of glass fibers fed from a roll of glass fiber mat 31 toward the nip 34 between the two rotating metering rolls 32 and 33. Glass fiber material 42 typically contains a relatively minor amount of fiber binder. In the process of the invention, the inter-fiber bonds of such a material are advantageously broken by any suitable means, as, e.g., by stretching of the fiber material 42 at a point between roll 31 and nip 34 of the metering rolls. By virtue of rotation of the pull rolls 38 and 39, the lower facing sheet 43 is pulled from the roll 30, the upper facing sheet 43' is pulled from the roll 30', and the glass fiber layer 42 is pulled from the roll 31. The facing sheets 43 and 43' having the glass fiber layer 42 and foam-forming mixture 45 therebetween pass from the upstream end of the apparatus through the nip 34 of the two rotating metering rolls 32 and 33 and on downstream. While the conveyor means illustrated in the accompanying drawings comprises a continuously advancing facing sheet with a glass fiber layer thereon, it could also be a facing sheet without any reinforcement material or a conveyor belt whose upper surface is advantageously coated with a release agent. The start or upstream end of the production line includes a smooth-topped platform or bed 46 which extends from upstream of the deposition point of the foamable mixture to a point upstream of and adjacent nip 34 of the metering rolls. As shown in Figure 1, bed plate 46 is positioned in a horizontal plane such that lower sheet 43 moves along its upper surface as the sheet advances downstream toward nip 34. Bed plate 46 is adjustably mounted so that it can be inclined from the horizontal to elevate its downstream transverse edge (adjacent nip 34) above its upstream transverse edge. An improved control of the foam chemical bank 45 has been achieved by thus tilting the conveyor so that the conveyor, with the foamable chemicals thereon, advances with an upward slope upstream of the nip-defining means.

The mixing head 29 is caused to move back and forth across the continuously advancing fiber layer and lower facing sheet by a reciprocating means 48. During this back and forth oscillation, the foam-forming mixture 45 is deposited through nozzle 47 and spread onto glass fiber layer 42, which is moving at a right angle to the traversing motion of the head. The mixing head reciprocates in timed relation to the forward travel of glass fiber layer 42 and facing sheet 43. In this manner, the foam-forming mixture 45 is evenly distributed upstream from the nip 34 onto glass fibers 42.

Immediately downstream of the laydown point, in the direction of conveyor travel, upper facing sheet 43' is brought into contact with the foamable mixture-coated surface of glass layer 42. As illustrated in Figure 1, this is suitably effected by passing upper sheet 43' around metering roll 32 and through nip 34. In an alternative embodiment of the invention, the stream of the foamable mixture can be dispensed through nozzle 47 onto the exposed surface of sheet 43' as the latter passes around roll 32. Thus, the upper and lower facing sheets are brought together at metering rolls 32 and 33 in surface-to-surface opposition relative to each other, with the foamable mixture and glass fibers sandwiched in between.

The nip or gap 34 formed between the metering rolls 32 and 33 is accurately adjustable so as to insure contact of the foamable mixture with the glass fibers and cause uniform distribution of the mixture, as well as uniform metering of the amount retained, as the facing sheets and enclosed fibers advance beyond this point. That is, as the facing sheets are brought into closely spaced adjacency at the metering rolls, a rolling bank of foamable mixture is built up so that there is a surplus always available to pass through the nip of the rolls. To provide for this precise adjustment of the nip gap, the upper roll is preferably mounted on an adjustable support which permits the distance between its axis and the axis of the lower metering roll to be varied so that the nip between the rolls can be adjusted from a wide gap to almost a zero setting. This arrangement provides a precise control of the final thickness in the resulting foam board, assuming the foamable mixture is allowed to expand thereafter substantially freely to develop its natural rise profile. The metering rolls thus serve as a means for bringing the facing sheets into spaced conjunction and for distributing the foamable mixture therebetween, as well as performing a final metering operation, supplementing the initial rough metering afforded by pour spout 47.

The spacing at the nip of the rolls can be set so as to cause a compression of the glass fiber layer passing therethrough. The foamable mixture which is simultaneously carried into the nip of the rolls is thereby squeezed into the glass fibers to thoroughly penetrate them. Where a mat of glass fibers which is substantially incompressible and yet expansible, such as described in U.S. Patent No. 4,118,533, is utilized, the gap width can be set so that the pressure applied to the mat 42 by the rotating rolls 32 and 33 does not substantially reduce its thickness but rather causes the foam-forming mixture 45 to penetrate and completely fill the interstices between the glass fibers forming the mat. Both mats of such an especially low loft and higher loft mats can be employed. However, a high loft fiber layer can't be used if, after being compressed by and passing through the nip-defining means and into a free-rise expansion zone, said fiber layer tends to return to its uncompressed condition without allowing

- 11 -

for uniform distribution throughout said fiber layer of the foaming mixture.

Upon laydown of the foamable mixture, its momentum causes it to spread out laterally on the travelling web to which it's applied, as can be seen in Figure 2. This phenomenon makes it difficult to ensure an adequate supply of the foamable mixture at the side edges of the travelling web without at the same time causing an excessive foam buildup on the side edges of the cured foam board. For example, in the practice of the invention disclosed in U.S. Patent No. 4,118,533, it became necessary in the preparation of a 4-foot wide foam board to lay down a liquid chemical bank of foamable ingredients 45 which spread out as much as the width of the bottom facing sheet in the transverse direction across said sheet just upstream of gap 34. This wide laydown pattern resulted in an excessive amount of foam material along the longitudinal edges of the board. The excess trim material added significantly to the cost of the process.

The edge dams 49 substantially reduce excess foam at the side edges of continuously produced foam structures. Referring to Figures 1 to 4, edge dams 49 comprises a pair of vertical side walls, one disposed at each side of the upper surface of the conveyor means adjacent and upstream of the nip-defining means. Each edge dam 49 is positioned with its downstream edge 50 closely adjacent the nip-defining means in the vicinity of a side section of said means. The edge dams can be variously located at the respective conveyor sides with the proviso that said edge dams are not positioned laterally outside the opposed side edges of the nip-defining means. With reference to Figure 2, this means that each edge dam 49 must be so located that the extension of its vertical plane longitudinally downstream intersects the surface of upper facing sheet 43 (located on metering roll 32). It is clear that if the edge dams 49 were instead moved laterally apart from each other so as to lie outside the opposed side edges of upper facing sheet 43, the foamable mixture 45 could escape downstream past the outside side surfaces of roll 32. As illustrated in Figures 1 to 3, the downstream edge 50 of each dam adjacent metering roll 32 has an arcuate surface conforming in curvature to the periphery of roll 32 and slightly spaced therefrom to form a side containment means for retaining the dispensed foamable mixture on its carrier. In practice, each edge dam 49 is positioned generally perpendicular to the axis of metering roll 32 with its downstream edge 50 suitably brought into as close proximity with metering roll 32 as possible without interfering in the roll's operation.

Figure 2 illustrates a desirable arrangement of the edge dams of the invention on a conveyor for producing a fiber-reinforced foam laminate. Edge dams 49 form lateral boundaries at each side edge of glass fiber layer 42, with the bottom, longitudinally extending edge 51 of each dam positioned over layer 42 and just inside one of the opposed, longitudinal side edges of layer 42. The downstream arcuate edge 50 of each dam is closely adjacent and just slightly inward (in the direction toward the other dam) from the longitudinal side edge of upper facing sheet 43. The two longitudinal side edges of lower facing sheet 43 are located a short distance beyond the corresponding glass fiber layer side edges in the horizontal plane. The contact of the dam's bottom edge 51 with the travelling surface of layer 42 should only be slight so as not to interfere with the passage of layer 42 along the conveyor.

Except for the requirements that each edge dam

0037173

- 13 -

49 must have sufficient surface area to block a side stream of foamable mixture 45 from spreading off its conveyor upstream of the nip-defining means and that the dam's downstream edge adjacent the nip-defining means must be contoured to closely conform to the adjoining shape of the nip-defining means, the edge dam may be variously shaped. For purposes of illustration, four such shapes are shown in Figures 3a to 3d. Each edge dam 49 illustrated comprises a relatively thin, flat, rigid plate whose downstream edge 50 is contoured to conform to the shape of the adjoining surface of the nip-defining means and whose bottom longitudinal edge is straight and abuts the upper surface of the advancing horizontal conveyor below it. Edge dams 49 can be constructed of any material which is compatible with the foam-forming chemicals and any solvents used in the dams' cleaning, as, e.g., teflon, metals such as stainless steel, plexiglass, medium density hardboard, high density polyethylene and wax.

Means may be provided for adjustably mounting edge dams 49 on the two opposite sides of the conveyor adjacent the nip-defining means. In the embodiment shown in Figure 4, the 1/4 inch teflon dam 49 is bolted to metal base plate 52, which contacts the dam side surface 53 facing outwardly from the conveyor. A threaded rod 54 is rotatably mounted to plate 52 by a swivel 55 and threaded apertured U-shaped support 56 and projects perpendicularly outwardly from dam side surface 53 and through threaded block 57, terminating in handle 58. Rod 54 and, correspondingly, edge dam 49 can thus be moved laterally in either direction by turning handle 58. In this way, if it is desired to increase the chemical bank of foamable mixture 45 upstream of metering roll 32, edge dams 49 can be moved laterally toward each other to the positions indicated by dotted lines in Figure 2. Support for the edge dam assembly and its laterally extending rod 54 is provided by vertical threaded rod 59, whose upper end is attached to block 57 and whose lower portion is threaded through nut-like locking member 60 and terminates in threaded cavity 61 of support block 62. Rod 59, and its associated edge dam, can be moved up or down and rotated by turning handle 63 of locking member 60. Block 62 and, accordingly, the edge dam, are movable longitudinally in either direction by turning handle 64 of the threaded rod 65. Rod 65 projects longitudinally downstream from block 62 and is attached thereto by a swivel and support arrangement (not shown in Figure 4) like that of threaded rod 54. Rod 65 is threaded through guiding support 66 and both the downstream projecting base 67 of support 66 and the bottom horizontal surface of block 62 rest on frame 68, base 67 being fixedly secured thereto, as by welding or bolting, and block 62 being freely movable thereover. Thus the adjustable mounting means make it possible to move edge dams 49 in all directions. It thus becomes easy to adjust the lateral extent of the foamable chemicals upstream of metering roll 32 and also to move the dams from the conveyor for cleaning.

After passing between the nip of the two rolls 32 and 33, the composite structure 69 comprises a lower and upper facing sheet 43 and 43' having therebetween a glass fiber layer 42 completely permeated by the foam-forming mixture 45 which wets the glass fibers of layer 42. Where a preferred low loft mat 42, such as the type disclosed in U.S. Patent No. 4,118,533 is used, the glass fibers, after passing through nip 34, do not themselves elastically recover but expand under the sole influence of the expansion of the foam-forming mixture 45. This composite structure 69 now passes into

- 15 -

oven 35 and on along the generally horizontally extending conveyor. While in the oven 35 the foam-forming
mixture expands in an expansion zone 37. This expansion
is initiated by heat generated in an exothermic reaction between the components 26, 27 and 28 of the foam-
forming mixture 45 and is regulated by heat added to
the oven 35 by the hot air from vent 36. The temperature within the oven 35 is controlled by varying the
temperature of the hot air from vents 36 and 36' in
order to insure that the oven temperature is maintained
within the desired limits of 150° F. to 275°F. and preferably 175° F. and 250°F. The foam 70, under the influence of the heat added to the oven 35 by the controlled introduction of hot air from vents 36 and 36'
cures to form structural laminate 71. The structural
laminate 71 then leaves the oven 35, passes between
the pull rolls 38 and 39, and is cut by side edge and
length cutting means 44a and 44b into finite lengths,
thereby forming discrete panels 72 and 72' of the
structural laminate 71. What little excess foam forms
at the sides of the panels is thus trimmed away by
side edge cutting means 44a.

The edge damming system provides a highly
effective way of controlling the foam chemicals after
their deposition on a continuous board line producing
cellular plastic insulation foam board, such as the
polyurethane and polyisocyanurate types. It functions in the region just prior to and/or during the
initial chemical reactivity and processing. Much more
efficient use of the chemical raw materials is thus
achieved by eliminating or substantially reducing the
amount of chemical edge trim often associated with such
board lines in the past. There is also a significant
reduction in the dust level associated with cutting
off this foam edge trim, an important ecological advantage. By use of the edge dams, a much wider chemical

- 16 -

laydown can be employed, resulting in a much simpler and more controllable process. Furthermore, use of the edge dams on a "free-rise" cellular plastic insulation board line has the effect of making the resultant board product more uniformly flat across its width.

- 17 -

CLAIMS

1. A method for continuously producing a foam plastic product from a foamable reaction mixture on a moving carrier comprising conveying said carrier along a production line, depositing said foamable reaction mixture on said carrier, passing said carrier and deposited foamable mixture through the nip of a nip-defining means and on downstream along said production line, said nip being located downstream of the foamable mixture deposition point and being set for dispersing substantially evenly said deposited foamable mixture over said carrier, characterized in that said foamable mixture is contained on said carrier in the region immediately upstream of said nip-defining means.

2. A method according to claim 1 wherein the foamable mixture is contained on the carrier by two vertical, longitudinally extending side walls located one at each side of the upper surface of said carrier with each said wall's downstream edge adjacent the nip-defining means.

3. A method according to claim 1 or claim 2 which includes the steps of supplying a lower facing sheet to serve as the moving carrier and supplying an upper facing sheet for positioning above the foamable mixture and lower facing sheet upstream of the nip of the nip-defining means, whereby the composite sandwich of said upper and lower facing sheets and foamable mixture therebetween is passed through said nip and on downstream along the production line.

4. A method according to claim 3 which includes the steps of supplying a lower facing sheet and supplying a layer of reinforcement material above said lower facing sheet, the combination of reinforcement material and lower facing sheet serving as the moving carrier, and supplying an upper facing sheet for positioning above the foamable mixture and moving carrier up

- 18 -

stream of the nip of the nip-defining means, whereby the composite sandwich of said upper and lower facing sheets and foamable mixture and reinforcement material therebetween is passed through said nip and on downstream along the production line, the nip gap being set for dispersing substantially evenly said foamable mixture throughout said reinforcement material and over said lower facing sheet.

5.  A method according to any one of claims 1-4 wherein the nip-defining means comprise two horizontal rotating rolls located one above the other transversely to the moving composite sandwich and spaced apart to form the nip for passage therethrough of said sandwich, the downstream edge of each side wall being closely adjacent the upper of said two nip rolls and being contoured to closely conform to the adjacent shape of said upper roll and the bottom longitudinal edge of each said side wall being straight and abutting the upper surface of the moving carrier below it.

6.  A method according to any one of claims 1-5 which includes the step of tilting the moving carrier in the region immediately upstream of the nip-defining means so that said carrier advances with an upward slope in said region.

7.  A method according to any one of claims 1-6 which includes the step of curing the foamable reaction mixture in a free-rise expansion zone downstream of the nip-defining means.

8.  Apparatus for continuously producing a foam plastic product from a foamable reaction mixture on a moving carrier comprising conveyor means for conveying said carrier along a production line, means for depositing said foamable reaction mixture on said carrier, means defining a nip, said nip being located downstream of the point of deposition of foamable mixture, said carrier and deposited foamable mixture being passed in operation through said nip and on downstream along said production line, the nip gap being set to disperse said deposited foamable mixture substantially evenly over said carrier, and containment means located upstream of said nip-defining means whereby said foamable mixture is contained on said carrier.

9. Apparatus according to claim 8 wherein the containment means comprise two vertical, longitudinally extending side walls, one at each side of the upper surface of said carrier with each said side wall's downstream edge adjacent the nip-defining means.

10. Apparatus according to claim 9 wherein the side walls are each adjustably mounted for movement in all directions.

11. Apparatus according to any one of claims 8 - 10 which includes means for supplying a lower facing sheet to serve as the moving carrier and means for supplying an upper facing sheet for positioning above the foamable mixture and lower facing sheet upstream of the nip of the nip-defining means, whereby in operation the composite sandwich of said upper and lower facing sheets and foamable mixture therebetween is passed through said nip and on downstream along the production line.

12. Apparatus according to any one of claims 8-11 which includes means for supplying a lower facing sheet and means for supplying a layer of reinforcement material above said lower facing sheet, the combination of reinforcement material and lower facing sheet serving as the moving carrier, and means for supplying an upper facing sheet for positioning above the foamable mixture and moving carrier upstream of the nip of the nip-defining means, whereby in operation the composite sandwich of said upper and lower facing sheets and foamable mixture and reinforcement material therebetween is passed through said nip and on downstream along the production line, the nip gap being set for dispersing substantially evenly said foamable mixture throughout said reinforcement material and over said lower facing sheet.

13. Apparatus according to any one of claims 8-12 wherein the nip-defining means comprise two horizontal rotating rolls located one above the other transversely to the production line and spaced apart to form in operation the nip for passage therethrough of said composite sandwich, the downstream edge of each side wall being closely adjacent the upper of said two nip rolls and being contoured to closely conform to the adjacent shape of said upper roll, and the bottom longitudinal edge of each said side wall being straight and abutting the upper surface of the moving carrier below it.

14. Apparatus according to any one of claims 8-13 which includes means for tilting the moving carrier in the region immediately upstream of the nip-defining means so that said carrier advances with an upward slope in said region.

15. Apparatus according to any one of claims 8-14 which includes means for curing the foamable reaction mixture in a free-rise expansion zone downstream of the nip-defining means.

16. Apparatus according to any one of claims 9-15 wherein each side wall comprises a thin, flat, rigid plate composed of a material selected from the group consisting of polytetrafluoroethylene, metal, polymethyl methacrylate, medium density hardboard, high density polyethylene, and wax.

FIG. I

FIG. 2

FIG. 3a

FIG. 3b

FIG. 3c

FIG. 3d

FIG. 4

1 / 1

0037173

| | European Patent Office | **EUROPEAN SEARCH REPORT** | Application number<br>EP 81 30 0846 |
|---|---|---|---|

## DOCUMENTS CONSIDERED TO BE RELEVANT

| Category | Citation of document with indication, where appropriate, of relevant passages | Relevant to claim |
|---|---|---|
| X | <u>US - A - 3 647 588</u> (GREIGG)<br>  * Figures 1,6,7; columns 6,11, 12 *<br><br>-- | 1-3,5, 8-11, 13 |
| | <u>US - A - 3 249 661</u> (WILLY)<br>  * Figures 1,2 *<br><br>-- | 1,8 |
| | <u>US - A - 3 278 659</u> (WILLY)<br>  * Figures 1,6 *<br><br>-- | 1,8 |
| | <u>US - A - 3 219 502</u> (WILLY)<br>  * Figures 1,2 *<br><br>-- | 1,8 |
| | <u>US - A - 3 298 884</u> (WILLY)<br>  * Figures 1-3,9 *<br><br>-- | 4,12 |
| A | <u>US - A - 4 028 158</u> (CELOTEX)<br>  * Whole document *<br><br>---- | |

**CLASSIFICATION OF THE APPLICATION (Int. Cl.³)**

B 29 D 27/04
        27/00

**TECHNICAL FIELDS SEARCHED (Int. Cl.³)**

B 29 D 27/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-06-1981 | KUSARDY |

EPO Form 1503.1   06.78